(19) **Europäisches Patentamt**
**European Patent Office**
**Office européen des brevets**

(11) **EP 4 398 000 A1**

(12) **EUROPEAN PATENT APPLICATION**
published in accordance with Art. 153(4) EPC

(43) Date of publication:
**10.07.2024 Bulletin 2024/28**

(21) Application number: **22891590.6**

(22) Date of filing: **31.08.2022**

(51) International Patent Classification (IPC):
**G01S 19/41** (2010.01)     **G01S 19/07** (2010.01)

(52) Cooperative Patent Classification (CPC):
**G01S 19/07; G01S 19/41; G01S 19/42**

(86) International application number:
**PCT/CN2022/116380**

(87) International publication number:
**WO 2023/082785 (19.05.2023 Gazette 2023/20)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.11.2021 CN 202111322856**

(71) Applicants:
- **Qianxun Spatial Intelligence Zhejiang Inc.
  Huzhou, Zhejiang 313201 (CN)**
- **Qianxun Spatial Intelligence Inc.
  Yangpu District
  Shanghai 200438 (CN)**

(72) Inventors:
- **CHEN, Huayan
  Shanghai 200438 (CN)**
- **HE, Xiyang
  Shanghai 200438 (CN)**
- **ZHAN, Xingqun
  Shanghai 200438 (CN)**
- **FENG, Shaojun
  Shanghai 200438 (CN)**

(74) Representative: **Kraus & Lederer PartGmbB
Thomas-Wimmer-Ring 15
80539 München (DE)**

(54) **IONOSPHERIC INTERFERENCE-RESISTANT NETWORK RTK POSITIONING METHOD, APPARATUS AND SYSTEM, AND DEVICE AND STORAGE MEDIUM**

(57)     A network RTK anti-ionospheric disturbance positioning method, apparatus, system, device and storage medium. The method includes: a server generates, according to observation data and position information of base stations in a base station network, ionospheric errors and tropospheric errors of a plurality of baselines, the baseline being formed by connecting two of the base stations; performs modeling based on the ionospheric errors and the tropospheric errors of the plurality of baselines and the position information of the base stations to obtain an atmospheric error model; calculates differential correction data for a plurality of grid point positions in the base station network and quality indicators for the plurality of grid point positions according to a model parameter of the atmospheric error model; determines, according to approximate position information sent by a terminal, a target grid point closest to the approximate position of the terminal from the plurality of grid point positions; and broadcasts differential correction data and a quality indicator for the target grid point to the terminal; the terminal receives differential correction data and a quality factor broadcast by a server, the differential correction data and the quality factor being generated by the server according to observation data and position information of base stations and approximate position information uploaded by the terminal; determines an RTK filtering mode according to the received quality factor, the RTK filtering mode including an ionosphere-free combined filtering mode or a non-combined filtering mode; and performs filtering and calculation, using the determined RTK filtering mode, on observation data of the terminal and the differential correction data received by the terminal to obtain high-precision position information of the terminal. The apparatus includes a receiving module, a judging module and a positioning module; or the apparatus includes an error module, a modeling module, a calculating module, a matching module and a broadcasting module. The system includes a server and a terminal. The device includes a processor and a memory storing computer program instructions. The computer storage medium includes computer program instructions stored thereon.

**(Cont. next page)**

receiving differential correction data and a quality indicator broadcast by a server — S110

determining, according to the received quality indicator, an RTK filtering mode, in which the RTK filtering mode includes an ionosphere-free combined filtering mode or a non-combined filtering mode — S120

performing filtering and calculation, using the determined RTK filtering mode, on observation data of the terminal and the difference correction data received by the terminal to obtain high-precision position information of the terminal — S130

**Fig. 1**

## Description

### CROSS REFERENCE TO RELATED APPLICATION

The present application claims priority to Chinese patent application No. 202111322856.7 filed on November 09, 2021 and entitled "NETWORK RTK ANTI-IONOSPHERIC DISTURBANCE POSITIONING METHOD AND RELATED DEVICES", the entire contents of which are incorporated herein by reference.

### TECHNICAL FIELD

The present application relates to the technical field of satellite positioning, and particularly relates to a network RTK anti-ionospheric disturbance positioning method, apparatus, system, device and storage medium.

### BACKGROUND

At present, in the network RTK (Real-time kinematic) positioning technology, a server can perform modeling on an ionospheric error and a tropospheric error, and broadcast corresponding differential correction data to a terminal according to an approximate position of the terminal. The terminal can eliminate the influence of the ionospheric error and the tropospheric error through the differential correction data to achieve high-precision positioning.

However, when the ionosphere is in an active period, there is a residual error when the server performs modeling on the ionospheric error, which leads to a still relatively great ionospheric error after the terminal uses the differential correction data broadcast by the server, so that the terminal fails to fix an integer ambiguity or fix an incorrect integer ambiguity, and high-precision positioning cannot be performed.

### SUMMARY

Embodiments of the present application provide a network RTK anti-ionospheric disturbance positioning method, apparatus, system, device and storage medium, which can solve the technical problem that network RTK positioning fails to realize high-precision positioning when the ionosphere is in an active period.

In a first aspect, some embodiments of the present application provide a network RTK anti-ionospheric disturbance positioning method applicable to a terminal, and the method includes:

receiving differential correction data and a quality indicator broadcast by a server, where the differential correction data and the quality indicator are generated by the server according to observation data and position information of base stations and approximate position information uploaded by the terminal, and the quality indicator is configured to characterize accuracy of an atmospheric error model used for generating the differential correction data; determining, according to the received quality indicator, an RTK filtering mode, where the RTK filtering mode includes an ionosphere-free combined filtering mode or a non-combined filtering mode; and performing filtering and calculation, using the determined RTK filtering mode, on observation data of the terminal and the differential correction data received by the terminal to obtain high-precision position information of the terminal.

The server broadcasts the quality indicator for characterizing the accuracy of the atmospheric error model, which enables the terminal to select the RTK filtering mode from the ionosphere-free combined filtering mode or the non-combined filtering mode according to the quality indicator, and when the ionosphere is the active period, select the ionosphere-free combined filtering mode for eliminating the ionospheric error to perform filtering and calculation, so as to eliminate the influence of the ionospheric error, and then realize high-precision positioning during the active period of the ionosphere.

In a second aspect, some embodiments of the present application provide a network RTK anti-ionospheric disturbance positioning method applicable to a server, and the method includes:

generating, according to observation data and position information of base stations in a base station network, ionospheric errors and tropospheric errors of a plurality of baselines, where the baseline is formed by connecting two of the base stations; performing modeling based on the ionospheric errors and the tropospheric errors of the plurality of baselines and the position information of the base stations to obtain an atmospheric error model; calculating differential correction data for a plurality of grid point positions in the base station network and quality indicators for the plurality of grid point positions according to a model parameter of the atmospheric error model; determining, according to approximate position information sent by a terminal, a target grid point closest to the approximate position of the terminal from the plurality of grid point positions; broadcasting differential correction data and a quality indicator for the target grid point to the terminal, so that the terminal determines an RTK filtering mode according to the quality indicator for the target grid point, and performs, using the differential correction data, filtering and calculation according to the RTK filtering mode to obtain high-precision position information of the terminal, where the RTK filtering mode includes an ionosphere-free combined filtering mode or a non-combined filtering mode.

The server can broadcast the differential correction data and the quality indicator for the target grid point to the terminal according to the approximate position sent by the terminal, so that the terminal determines the RTK filtering mode according to the quality indicator, and then performs filtering and calculation according to the differential correction data and the observation data of the terminal, so as to obtain the high-precision position information of the terminal.

In a third aspect, some embodiments of the present application provide a network RTK anti-ionospheric disturbance positioning apparatus, and the apparatus includes:

a receiving module configured to receive differential correction data and a quality indicator broadcast by a server, where the differential correction data and the quality indicator are generated by the server according to observation data and position information of base stations and approximate position information uploaded by the terminal, and the quality indicator is configured to characterize accuracy of an atmospheric error model used for generating the differential correction data;

a judging module configured to determine, according to the received quality indicator, an RTK filtering mode, where the RTK filtering mode includes an ionosphere-free combined filtering mode or a non-combined filtering mode;

a positioning module configured to perform filtering and calculation, using the determined RTK filtering mode, on observation data of the terminal and the differential correction data received by the terminal to obtain high-precision position information of the terminal; or

the apparatus includes:

an error module configured to generate, according to observation data and position information of base stations in a base station network, ionospheric errors and tropospheric errors of a plurality of baselines, where the baseline is formed by connecting two of the base stations;

a modeling module configured to perform modeling based on the ionospheric errors and the tropospheric errors of the plurality of baselines and the position information of the base stations to obtain an atmospheric error model;

a calculating module configured to calculate differential correction data for a plurality of grid point positions in the base station network and quality indicators for the plurality of grid point positions according to a model parameter of the atmospheric error model;

a matching module configured to determine, according to approximate position information sent by a terminal, a target grid point closest to the approximate position of the terminal from the plurality of grid point positions; and

a broadcasting module configured to broadcast differential correction data and a quality indicator for the target grid point to the terminal, so that the terminal determines an RTK filtering mode according to the quality indicator for the target grid point, and performs, using the differential correction data, filtering and calculation according to the RTK filtering mode to obtain high-precision position information of the terminal, where the RTK filtering mode includes an ionosphere-free combined filtering mode or a non-combined filtering mode.

In a fourth aspect, some embodiments of the present application provide a network RTK anti-ionospheric disturbance positioning system including a server and a terminal, where:

the server generates, according to observation data and position information of base stations in a base station network, ionospheric errors and tropospheric errors of a plurality of baselines, where the baseline is formed by connecting two of the base stations;

the server performs modeling based on the ionospheric errors and the tropospheric errors of the plurality of baselines and the position information of the base stations to obtain an atmospheric error model;

the server calculates differential correction data for a plurality of grid point positions in the base station network and quality indicators for the plurality of grid point positions according to a model parameter of the atmospheric error model;

the server determines, according to approximate position information sent by a terminal, a target grid point closest to the approximate position of the terminal from the plurality of grid point positions;

the server broadcasts differential correction data and a quality indicator for the target grid point to the terminal;

the terminal receives differential correction data and a quality indicator broadcast by a server, where the differential correction data and the quality indicator are generated by the server according to observation data and position information of base stations and approximate position information uploaded by the terminal, and the quality indicator is configured to characterize accuracy of an atmospheric error model used for generating the differential correction data;

the terminal determines, according to the received quality indicator, an RTK filtering mode, where the RTK filtering mode includes an ionosphere-free combined filtering mode or a non-combined filtering mode; and

the terminal performs filtering and calculation, using the determined RTK filtering mode, on observation data of the terminal and the differential correction data received by the terminal to obtain high-precision position information of the terminal.

In a fifth aspect, some embodiments of the present application provide a network RTK anti-ionospheric disturbance positioning device including a processor and a memory storing computer program instructions. When the processor executes the computer program instructions, the network RTK anti-ionospheric disturbance positioning method as described above is implemented.

In a sixth aspect, some embodiments of the present application provide a computer storage medium having stored thereon computer program instructions that, when executed by a processor, implement the network RTK anti-ionospheric disturbance positioning method as described above.

Compared with the related art, in the network RTK anti-ionospheric disturbance positioning method according to embodiments of the present application, the quality indicator for characterizing the accuracy of the atmospheric error model is generated and broadcast together with the differential correction data to the terminal when the server performs modeling on the ionospheric errors and the tropospheric errors. The terminal can judge, according to the quality indicator, whether the current differential correction data is affected by the active ionosphere, select, according to a judgment result, an appropriate RTK filtering mode from the ionosphere-free combined filtering mode or the non-combined filtering mode, and perform filtering and calculation on the observation data of the terminal and the differential correction data received by the terminal, so as to eliminate the influence of the ionospheric error when the ionosphere is active, and realize high-precision positioning. Through the quality indicator broadcast by the server, the filtering mode can be switched according to the active state of the ionosphere, so as to avoid the disturbance of the ionospheric error during the active period of the ionosphere and improve the positioning effect during the active period of the ionosphere.

**BRIEF DESCRIPTION OF THE DRAWINGS**

In order to illustrate technical solutions of embodiments of the present application more clearly, the drawings required for the embodiments of the present application will be briefly described. Obviously, the drawings described below are only some embodiments of the present application. For a person skilled in the art, other drawings can also be obtained from these drawings without any inventive effort.

    Fig. 1 is a schematic flow diagram of a network RTK anti-ionospheric disturbance positioning method according to an embodiment of the present application;
    Fig. 2 is a schematic flow diagram of a network RTK anti-ionospheric disturbance positioning method according to another embodiment of the present application;
    Fig. 3 is a schematic flow diagram of a network RTK anti-ionospheric disturbance positioning method according to yet another embodiment of the present application;
    Fig. 4 is a schematic diagram of a refined step for S210 in the embodiment of Fig. 2;
    Fig. 5 is a schematic flow diagram of a network RTK anti-ionospheric disturbance positioning method according to an embodiment of the present application;
    Fig. 6 is a schematic flow diagram of a network RTK anti-ionospheric disturbance positioning method according to another embodiment of the present application;
    Fig. 7 is a schematic flow diagram of a network RTK anti-ionospheric disturbance positioning method according to yet another embodiment of the present application;
    Fig. 8 is a schematic structural diagram of a network RTK anti-ionospheric disturbance positioning apparatus according to an embodiment of the present application;
    Fig. 9 is a schematic structural diagram of a network RTK anti-ionospheric disturbance positioning apparatus according to another embodiment of the present application;
    Fig. 10 is a schematic hardware structural diagram of a network RTK anti-ionospheric disturbance positioning device according to an embodiment of the present application.

**DETAILED DESCRIPTION**

Features of various aspects and exemplary embodiments of the present application will be described in detail below. In order to make objects, technical solutions and advantages of the present application clearer, the present application is further described in detail below with reference to the drawings and specific embodiments. It should be understood that the specific embodiments described herein are only used to explain the present application, but not to limit the present application. For those skilled in the art, the present application can be implemented without some of these specific details. The following description of the embodiments is merely to provide a better understanding of the present application by illustrating examples of the present application.

It should be noted that, in the present application, the relational terms, such as first and second, are used merely to distinguish one entity or operation from another entity or operation, without necessarily requiring or implying any actual such relationships or orders for these entities or operations. Moreover, the terms "comprise", "include", or any other variants thereof, are intended to represent a non-exclusive inclusion, such that a process, method, article or device including a series of elements includes not only those elements, but also other elements that are not explicitly listed or elements inherent to such a process, method, article or device. Without further limitation, an element preceded by "including..."

does not exclude presence of additional similar elements in a process, a method, an article or a device including the element.

It should be noted that the embodiments in the present application and the features of the embodiments may be combined with each other in the case of no conflict. The embodiments will be described in detail below with reference to the accompanying drawings.

In modern GNSS (Global navigation satellite system) high-precision real-time positioning, network RTK positioning technology has become the mainstream currently. In the network RTK positioning technology, each base station can obtain atmospheric delay information of the ionosphere and the troposphere, and calculate an ionospheric error and a tropospheric error corresponding to the base station. According to an approximate position sent by a terminal, an atmospheric error model can be established according to a base station network formed by the base stations, and differential correction data for the approximate position can be calculated according to the established atmospheric error model and then sent to the terminal, so that the terminal can perform filtering and calculation on observation data and the differential correction data to obtain high-precision position information of the terminal.

However, during an active period of the ionosphere, there is a relatively great observation error when performing modeling on the ionospheric error. When the terminal receives the differential correction data, since there is still a relatively great ionospheric error, the terminal fails to fix an integer ambiguity or fix an incorrect integer ambiguity, and thus a high-precision positioning result cannot be obtained.

The embodiments of the present application provide a network RTK anti-ionospheric disturbance positioning method, apparatus, system, device and storage medium. The network RTK anti-ionospheric disturbance positioning method according an embodiment of the present application is firstly described below.

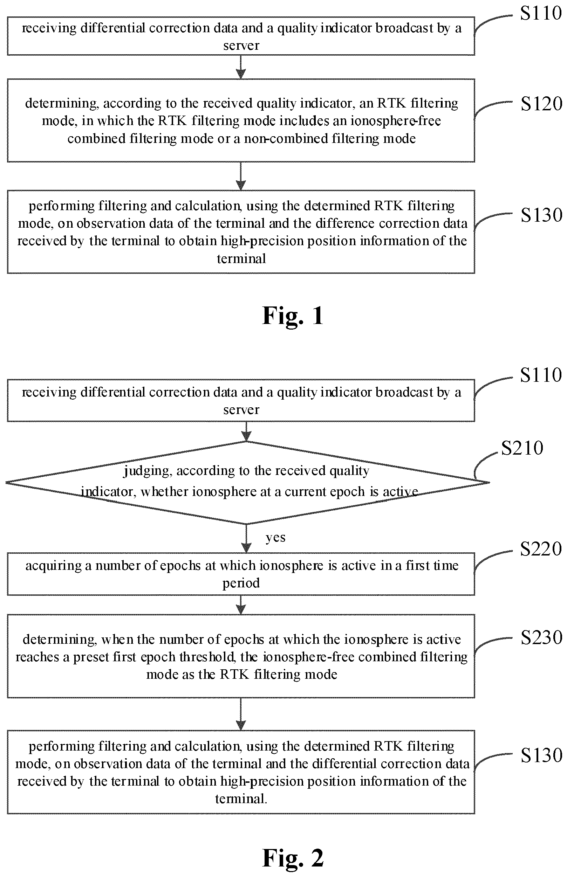

Fig. 1 shows a schematic flow diagram of a network RTK anti-ionospheric disturbance positioning method according to an embodiment of the present application. The network RTK anti-ionospheric disturbance positioning method is applicable to a terminal, and the method includes:

S110: receiving differential correction data and a quality indicator broadcast by a server, where the differential correction data and the quality indicator are generated by the server according to observation data and position information of base stations and approximate position information uploaded by the terminal, and the quality indicator is configured to characterize accuracy of an atmospheric error model used for generating the differential correction data;

S120: determining, according to the received quality indicator, an RTK filtering mode, where the RTK filtering mode includes an ionosphere-free combined filtering mode or a non-combined filtering mode; and

S130: performing filtering and calculation, using the determined RTK filtering mode, on observation data of the terminal and the differential correction data received by the terminal to obtain high-precision position information of the terminal.

The server may be in data communication with the base stations and the terminal to realize data transmission. Herein, observation data of the base station may include an observed carrier wave, a pseudo-range observation value and the like, and position information of the base station may include a coordinate of the base station, antenna information encoding, and the like. The observation data of the terminal may include a carrier wave, a pseudo-range observation value, and the like, observed at the same epoch as the base station. It may be appreciated that data acquired by the base station may also include ephemeris data, and data acquired by the terminal may include ephemeris data similarly.

In this embodiment, the base stations can send their observation data and position information to the server, and the terminal can send its approximate position information to the server. The server can generate, according to the observation data and the position information of the base stations and the approximate position information uploaded by the terminal, differential correction data and a quality indicator corresponding to the terminal. After receiving the differential correction data and the quality indicator, the terminal can select a corresponding RTK filtering mode according to the quality indicator, so as to select an RTK filtering mode that can effectively eliminate the ionospheric residual error when the ionosphere is active, and can also perform filtering and calculation under the determined filtering mode according to the differential correction data and its observation data to fix the integer ambiguity and obtain the high-precision position information of the terminal. The server broadcasts the quality indicator for characterizing the accuracy of the atmospheric error model, which enables the terminal to select the RTK filtering mode from the ionosphere-free combined filtering mode or the non-combined filtering mode according to the quality indicator, and when the ionosphere is the active period, select the ionosphere-free combined filtering mode for eliminating the ionospheric error to perform filtering and calculation, so as to eliminate the influence of the ionospheric error, and then realize high-precision positioning during the active period of the ionosphere.

In S110, the base stations may upload observed observation data and position information, and the terminal may upload its approximate position information. The server, after receiving the observation data and position information of the base stations and the approximate position information of the terminal, may generate differential correction data and a quality indicator and broadcast the differential correction data and the quality indicator to the terminal.

In S120, the terminal, after receiving the differential correction data and the quality indicator, may determine, according to the received quality indicator, an RTK filtering mode for filtering and calculation. The RTK filtering mode may be an ionosphere-free combined filtering mode or a non-combined filtering mode. Herein, if the ionosphere-free combined filtering mode is used as the RTK filtering mode, the influence of the ionospheric error can be eliminated when the ionospheric residual error is relatively great, and the high-precision positioning of the terminal during the active period of the ionosphere can be realized; and if the non-combined filtering mode is used as the RTK filtering mode, the high-precision positioning of the terminal can be realized when the ionosphere is inactive.

As an optional embodiment, referring to Fig. 2, in order to eliminate the influence of the ionospheric error when the ionosphere is active, the above-mentioned S120 may include:

> S210: judging, according to the received quality indicator, whether ionosphere at a current epoch is active;
> S220: acquiring, when the ionosphere at the current epoch is active, a number of epochs at which ionosphere is active in a first time period; and
> S230: determining, when the number of epochs at which the ionosphere is active reaches a preset first epoch threshold, the ionosphere-free combined filtering mode as the RTK filtering mode.

In the present embodiment, the terminal can judge, according to the received quality indicator, whether the ionosphere at the current epoch is active. If it is determined that the ionosphere at the current epoch is active, the number of epochs at which the ionosphere is active in the first time period, and when the number reaches a preset value, it is determined to use the ionosphere-free combined filtering mode as the RTK filtering mode, so as to perform, according to the ionosphere-free combined filtering mode, the filtering and calculation on the observation data of the terminal and the differential correction data received by the terminal to eliminate the influence of the ionospheric error when the ionosphere is active, and then the high-precision position information of the terminal is obtained.

In S210, after receiving the quality indicator, the terminal may judge the quality indicator according to a preset judgment rule so as to determine whether the ionosphere at the current epoch is active. When a preset judgment rule is satisfied, it is determined that the ionosphere at the current epoch is active.

In S220, when the terminal determines that the ionosphere at the current epoch is active, the number of epochs at which the ionosphere is active in the first time period by the current epoch may be counted to obtain the number of epochs at which the ionosphere is active in the first time period. The preset judgment rule may be whether the number of epochs at which the ionosphere is active in the first time period reaches a preset first epoch threshold.

For example, when the terminal determines that the ionosphere is active at the current epoch, an ionospheric activity value corresponding to the current epoch may be set to "active" or "1" and stored in a database. Similarly, when the terminal determines that the ionosphere at the current epoch is inactive, the ionospheric activity value corresponding to the current epoch may be set to "inactive" or "0" and stored in the database. When the terminal determines that the ionosphere at the current epoch is active, the number of epochs at which the ionospheric activity value is "active" or "1" in the past first time period can also be acquired from the database, so as to determine the number of epochs at which the ionosphere is active in the first time period.

In S230, after acquiring the number of epochs at which the ionosphere is active in the first time period, the terminal may compare the number of epochs at which the ionosphere is active with the preset first epoch threshold, and if the number of epochs at which the ionosphere is active reaches the preset first epoch threshold, the terminal may determine the ionosphere-free combined filtering mode as the RTK filtering mode to be used.

In the ionosphere-free combined filtering mode, the terminal may calculate the ionosphere-free combined observation value according to its own observation data and an ionosphere-free combined equation. The ionosphere-free combined equation is as follows:

$$P_{IF} = \frac{f_1^2}{f_1^2 - f_2^2} P_1 - \frac{f_2^2}{f_1^2 - f_2^2} P_2$$

$$\phi_{IF} = \frac{f_1^2}{f_1^2 - f_2^2} \phi_1 - \frac{f_1 f_2}{f_1^2 - f_2^2} \phi_2 \;;$$

where $P_1$, $P_2$ are pseudo-range observation values (unit: m) at a first frequency and a second frequency respectively, $\phi_1, \phi_2$ are carrier observation values (unit: cycle) at the first frequency and the second frequency, $P_{IF}, \phi_{IF}$ are ionosphere-free combined observation values of pseudo-ranges and carriers respectively. By acquiring the ionosphere-free combined observation values and replacing pseudo-range observation values and carrier observation values with the ionosphere-free combined observation values for filtering and calculation, the residual error of the ionosphere can be eliminated when the ionosphere is active, and the high-precision position information of the terminal can be obtained.

It can be appreciated that in the embodiment described above, the preset judgment rule may also be to judge whether the number of epochs at which the ionosphere is continuously active in the first time period has reached the preset first epoch threshold. In the judgment rule, whenever the terminal determines that the ionosphere at the current epoch is active, ionospheric activity values at historical epochs of which the number is the preset first epoch threshold may be acquired starting from the current epoch. For example, when the preset first epoch threshold is 10, ionospheric activity values at 10 successive epochs can be acquired starting from the current epoch, and if the ionospheric activity values at the 10 epochs are "active" or "1", the terminal can determine the ionosphere-free combined filtering mode as the RTK filtering mode. If there is at least one epoch at which the ionospheric activity value is "inactive" or "0", the RTK filtering mode is not adjusted.

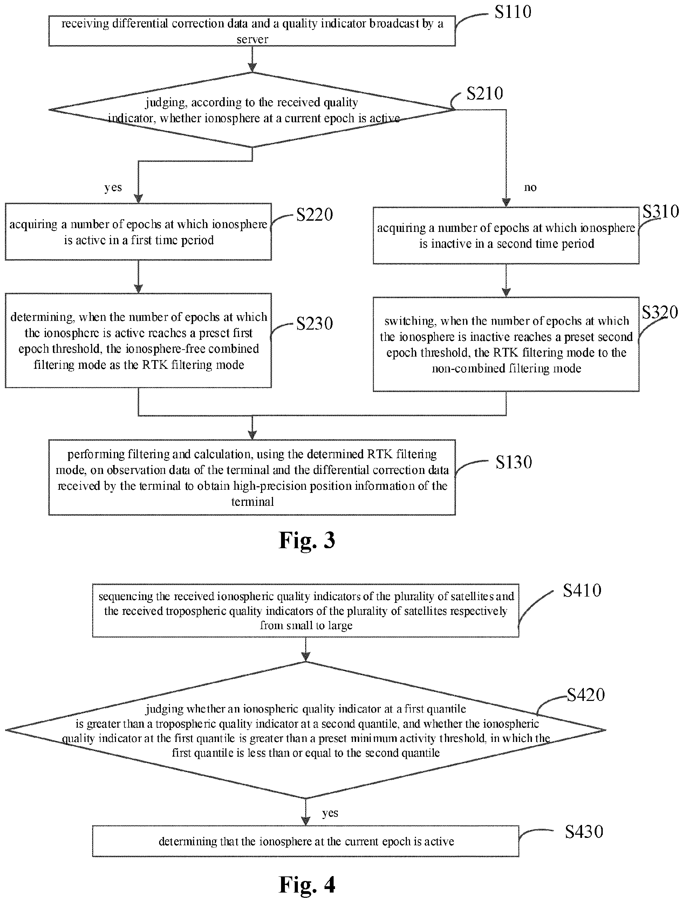

As an optional embodiment, referring to Fig. 3, in order to achieve the high-precision positioning when the ionosphere is inactive, the above-mentioned S230 may be followed by:

> S310: acquiring, when the ionosphere at the current epoch is inactive, a number of epochs at which ionosphere is inactive in a second time period; and
> S320: switching, when the number of epochs at which the ionosphere is inactive reaches a preset second epoch threshold, the RTK filtering mode to the non-combined filtering mode.

In this embodiment, the terminal, when determining that the ionosphere at the current epoch is inactive, acquires the number of the epochs at which the ionosphere is inactive in the second time period, and when the number of epochs at which the ionosphere is inactive reaches a corresponding preset value, determines the non-combined filtering mode as the RTK filtering mode to be used. The terminal, through the non-combined filtering mode, performs the filtering and calculation on the observation data of the terminal and the differential correction data received by the terminal, which can eliminate the influence of various errors on the integer ambiguity, so as to fix the integer ambiguity fast and calculate the high-precision position information of the terminal.

In S310: when the terminal determines that the ionosphere at the current epoch is inactive, the number of epochs at which the ionosphere is active in the second time period by the current epoch may be counted to obtain the number of epochs at which the ionosphere is inactive in the second time period. For example, when the terminal determines that the ionosphere is inactive at the current epoch, an ionospheric activity value corresponding to the current epoch may be set to "inactive" or "0" and stored in a database. When the terminal determines that the ionosphere at the current epoch is inactive, the number of epochs at which the ionospheric activity value is "inactive" or "0" in the past second time period can also be acquired from the database, so as to determine the number of epochs at which the ionosphere is active in the second time period.

In S320, after acquiring the number of epochs at which the ionosphere is inactive in the second time period, the terminal may compare the number of epochs at which the ionosphere is inactive with the preset second epoch threshold, and if the number of epochs at which the ionosphere is inactive reaches the preset second epoch threshold, the terminal may determine the non-combined filtering mode as the RTK filtering mode to be used.

Similarly, the above-mentioned preset judgment rule may also be whether the number of epochs at which the ionosphere is continuously inactive has reached the preset second epoch threshold. That is, the terminal, when determining that the ionosphere at the current epoch is inactive, may acquires ionosphere activity values at a plurality of successive epochs before the current epoch. If there are successive epochs of which the number is the preset second epoch threshold and the ionospheric activity values at these successive epochs are "inactive" or "0", the terminal can switch the RTK filtering mode to the non-combined filtering mode. If at least one of the ionospheric activity values at the plurality of successive epochs is "active" or "1", the RTK filtering mode is not adjusted.

As an optional embodiment, referring to Fig. 4, in order to eliminate the influence of a common error when judging whether the ionosphere is active according to the quality indicator, the quality indicator may include ionospheric quality indicators corresponding to a plurality of satellites and tropospheric quality indicators corresponding to the plurality of satellites, and the above-mentioned S210 may include:

> S410: sequencing the received ionospheric quality indicators of the plurality of satellites and the received tropospheric quality indicators of the plurality of satellites respectively from small to large; and
> S420: judging whether an ionospheric quality indicator at a first quantile is greater than a tropospheric quality indicator at a second quantile, and whether the ionospheric quality indicator at the first quantile is greater than a preset minimum activity threshold, where the first quantile is less than or equal to the second quantile.
> S210 is further followed by:
> S430: determining, when the ionospheric quality indicator at the first quantile is greater than the tropospheric quality indicator at the second quantile, and the ionospheric quality indicator at the first quantile is greater than the preset minimum activity threshold, that the ionosphere at the current epoch is active.

As another optional embodiment, the above-mentioned S210 may include:

> S440: sequencing the received ionospheric quality indicators of the plurality of satellites and the received tropospheric quality indicators of the plurality of satellites respectively from large to small; and
> S450: judging whether an ionospheric quality indicator at a third quantile is greater than a tropospheric quality indicator at a fourth quantile, and whether the ionospheric quality indicator at the third quantile is greater than a preset minimum activity threshold, where the third quantile is greater than or equal to the fourth quantile;

S210 is further followed by:

S460: determining, when the ionospheric quality indicator at the third quantile is greater than the tropospheric quality indicator at the fourth quantile, and the ionospheric quality indicator at the third quantile is greater than the preset minimum activity threshold, that the ionosphere at the current epoch is active.

In this embodiment, the quality indicator received by the terminal includes the ionospheric quality indicators of the plurality of satellites and the tropospheric quality indicators of the plurality of satellites. The terminal, after receiving the ionospheric quality indicators of the plurality of satellites and the tropospheric quality indicators of the plurality of satellites, may sequence the ionospheric quality indicators and sequence the tropospheric quality indicators as well. After sequencing, an ionospheric quality indicator at a particular quantile and a tropospheric quality indicator at a particular quantile may be acquired, and according to the acquired ionospheric quality indicator, tropospheric quality indicator, and the preset minimum activity threshold, it may be determined whether the ionosphere at the current epoch is active. When calculating the quality indicator, there are also other influencing factors to cause some errors in the obtained quality indicator. By comparing the ionospheric quality indicator with the tropospheric quality indicator, the influence of a common error caused by base station observation, base station network topology and other factors can be excluded, and the current ionospheric activity state can be accurately judged.

In S410, the terminal may sequence the received ionospheric quality indicators of the plurality of satellites from small to large, and sequence the received tropospheric quality indicators of the plurality of satellites from small to large.

In S420, the terminal can determine the ionospheric quality indicator at the first quantile from the sequenced ionospheric quality indicators; and determine the tropospheric quality indicator at the second quantile from the sequenced tropospheric quality indicators. Herein a quantile value of the first quantile may be a quantile value less than or equal to the second quantile. For example, the first quantile may be 75% and the second quantile may be 90%. Herein, an ionospheric quality indicator $\sigma_{I,75}$ at the first quantile of 75% refers to, in the sequencing from small to large, a number of ionospheric quality indicators that are less than the ionospheric quality indicator at the first quantile is 75% of the total number of ionospheric quality indicators. Similarly, a tropospheric quality indicator $\sigma_{T,90}$ at the second quantile of 90% refers to, in the sequencing from small to large, a number of tropospheric quality indicators that are less than the tropospheric quality indicator at the second quantile is 90% of the total number of tropospheric quality indicators.

The terminal, after acquiring the ionospheric quality indicator at the first quantile and the tropospheric quality indicator at the second quantile, may compare the ionospheric quality indicator at the first quantile with the tropospheric quality indicator at the second quantile, and judge whether the ionospheric quality indicator at the first quantile is greater than the the tropospheric quality indicator at the second quantile. The terminal can also judge whether the ionospheric quality indicator at the first quantile is greater than the preset minimum activity threshold.

In S430, the terminal may determine, when the ionospheric quality indicator at the first quantile is greater than the tropospheric quality indicator at the second quantile, and the ionospheric quality indicator at the first quantile is greater than the preset minimum activity threshold, that the ionosphere at the current epoch is active.

For example, after obtaining an ionospheric quality indicator $\sigma_{I,75}$ at the first quantile of 75% and a tropospheric quality indicator $\sigma_{T,90}$ at the second quantile of 90%, the preset minimal activity value $I_{low}$ may be determined and it is judged whether $\sigma_{I,75} > \sigma_{T,90}$ and $\sigma_{I,75} > I_{low}$. When $\sigma_{I,75} > \sigma_{T,90}$ and $\sigma_{I,75} > I_{low}$, it may be determined that the ionosphere at the current epoch is active, otherwise it may be determined that the ionosphere at the current epoch is calm or inactive.

It may be appreciated that the factors affecting the quality indicator include not only ionospheric modeling errors or tropospheric modeling errors, but also the geometrical topology of the base station network and observation noises of the base stations. If only the ionospheric quality indicator is compared with the preset minimum activity threshold, it is difficult to judge whether the ionosphere is in an active state at this moment. Therefore, the ionospheric quality indicator can also be compared with the tropospheric quality indicator to exclude the common error caused by base station observation, base station network topology and other factors.

In S440, the terminal may sequence the received ionospheric quality indicators of the plurality of satellites from large to small, and sequence the received tropospheric quality indicators of the plurality of satellites from large to small.

In S450, the terminal can determine the ionospheric quality indicator at the third quantile from the sequenced ionospheric quality indicators; and determine the tropospheric quality indicator at the fourth quantile from the sequenced tropospheric quality indicators. Herein, a quantile value of the third quantile is greater than or equal to a quantile value of the fourth quantile.

In S460, the terminal may determine, when the ionospheric quality indicator at the third quantile is greater than the tropospheric quality indicator at the fourth quantile, and the ionospheric quality indicator at the third quantile is greater than the preset minimum activity threshold, that the ionosphere at the current epoch is active.

In S130, the terminal may perform filtering and calculation, according to the determined RTK filtering mode, on observation data of the terminal and the differential correction data received by the terminal to obtain high-precision position information of the terminal. For example, the terminal, according to the received quality indicator, may determine that the RTK filtering mode is the ionosphere-free combined filtering mode when determining that the ionosphere is in an active period; and determine that the RTK filtering mode is the non-combined filtering mode when determining that the ionosphere is in an inactive period.

When the ionosphere is in the inactive period, the terminal can, through the non-combined filtering mode, perform filtering and calculation on the differential correction data and the observation data of the terminal, so as to obtain the high-precision position information of the terminal during the inactive period of the ionosphere.

When the ionosphere is in the active period, the terminal can, through the ionosphere-free combined mode, calculate ionosphere-free combined observation values according to carrier observation values at two frequencies and pseudo-range observation values, so that the influence of the ionospheric error can be eliminated when the terminal performs filtering and calculation, and the high-precision position information of the terminal can also be obtained during the active period of the ionosphere according to the differential correction data and the observation data of the terminal.

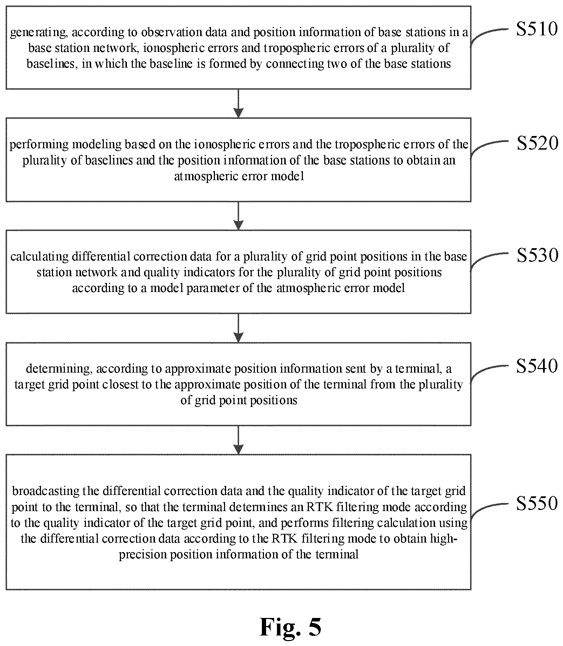

Fig. 5 shows a schematic flow diagram of a network RTK anti-ionospheric disturbance positioning method according to another embodiment of the present application. A network RTK anti-ionospheric disturbance positioning method is applicable to a server, and the network RTK anti-ionospheric disturbance positioning method includes:

S510: generating, according to observation data and position information of base stations in a base station network, ionospheric errors and tropospheric errors of a plurality of baselines, where the baseline is formed by connecting two of the base stations;

S520: performing modeling based on the ionospheric errors and the tropospheric errors of the plurality of baselines and the position information of the base stations to obtain an atmospheric error model;

S530: calculating differential correction data for a plurality of grid point positions in the base station network and quality indicators for the plurality of grid point positions according to a model parameter of the atmospheric error model;

S540: determining, according to approximate position information sent by a terminal, a target grid point closest to the approximate position of the terminal from the plurality of grid point positions;

S550: broadcasting the differential correction data and the quality indicator of the target grid point to the terminal, so that the terminal determines an RTK filtering mode according to the quality indicator of the target grid point, and performs filtering and calculation using the differential correction data according to the RTK filtering mode to obtain high-precision position information of the terminal, where the RTK filtering mode includes an ionosphere-free combined filtering mode or a non-combined filtering mode.

In this embodiment, the server can, according to the data sent by the base stations in the base station network, generate the ionospheric errors and the tropospheric errors of the plurality of baselines, and perform modeling based on the errors of the baselines to obtain the atmospheric error model. The differential correction data and the quality indicators for the grid point positions in an area covered by the base station network can be calculated through the atmospheric error model. After receiving the approximate position sent by the terminal, the grid point closest to the approximate position may be determined according to the approximate position from the plurality of grid point positions, and the differential correction data and the quality indicator corresponding to the grid point may be broadcast to the terminal, so that the terminal, after determining the RTK filtering mode according to the quality indicator, performs filtering and calculation according to the differential correction data and the observation data of the terminal to obtain the high-precision position information of the terminal.

In S510, the server may receive the observation data and position information sent by the base stations in the base station network respectively. Among the base stations in the base station network, any two of the base stations may be connected to form a baseline, and according to the observation data and the position information of the two base stations, the ionospheric error and tropospheric error of the baseline may be generated. After connecting the base stations in pairs, the ionospheric errors and tropospheric errors corresponding to the plurality of baselines in the base station network respectively may be generated.

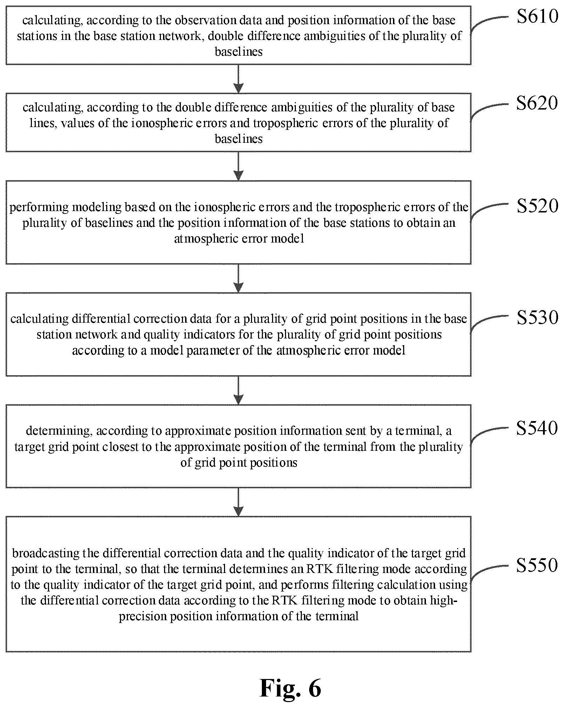

As an optional embodiment, referring to Fig. 6, in order to generate the ionospheric errors and the tropospheric errors of the baselines, the above-mentioned S510 may include:

S610: calculating, according to the observation data and position information of the base stations in the base station network, double difference ambiguities of the plurality of baselines;

S620: calculating, according to the double difference ambiguities of the plurality of base lines, values of the ionospheric errors and tropospheric errors of the plurality of baselines.

In this embodiment, the server may acquire the observation data and position information of the base stations in the base station network. When two base stations are selected to be connected to form a baseline, a double difference ambiguity of the baseline can be calculated according to the observation data and position information of the two base stations. After fixing the double difference ambiguity of the baseline, an ionospheric error value and a tropospheric error value of the baseline can be back-calculated. By performing the back-calculation for each baseline in sequence, ionospheric error values and tropospheric error values of the plurality of baselines can be obtained. It may be appreciated that the ionospheric error value and the tropospheric error value of the baseline are the differential correction data corresponding to the baseline.

In S610, a plurality of baselines can be formed by connecting a plurality of base stations in pairs, and the plurality of baselines and the base stations can form a network, and thus a base station network is formed. According to the observation data and position information of the base stations, the double difference ambiguities of the corresponding baselines can be calculated.

In S620, according to the fixed double difference ambiguity of the baseline, the ionospheric error value and the tropospheric error value of the baseline can be calculated through corresponding equations. The back-calculation equations are as follows:

$$\Delta\nabla I = \frac{f_1^2}{f_1^2 - f_2^2}\left(\Delta\nabla\tilde{L}_1 - \Delta\nabla\tilde{L}_2\right)_;$$

$$\Delta\nabla T = \Delta\nabla\tilde{L}_{if} - \Delta\nabla\rho_;$$

where $\Delta\nabla I$ is the ionospheric error value, $\Delta\nabla T$ is the tropospheric error value. $f_1$ and $f_2$ are first and second frequencies respectively (unit: MHz) of an observation signal of the base station, $\Delta\nabla\tilde{L}_1$ and $\Delta\nabla\tilde{L}_2$ are carrier observation values (unit: m) for which the ambiguity are resolved at the first and second frequencies respectively, $\Delta\nabla\rho$ is a double difference vacuum geometrical distance value, and $\Delta\nabla\rho$ can be calculated according to coordinates of the satellite and the precise coordinates of the base station.

In S520, the server, after calculating the ionospheric errors and the tropospheric errors of the plurality of baselines respectively, may perform modeling of the atmospheric error model for the area covered by the base station network according to the ionospheric errors and the tropospheric errors of the plurality of baselines and the position information of the base stations, and calculate the model parameter of the atmospheric error model. After establishing the atmospheric error model, for a particular position in the area, an ionospheric error and a tropospheric error of the particular position can be calculated according to coordinates of the particular position and the model parameter of the atmospheric error model.

For example, the modeling equation for the atmospheric error model may be:

$$L = AX_;$$

where L is the observation value of the atmospheric error model, and for the ionospheric error and the tropospheric error, modeling can be performed respectively. That is, the observation value of the ionospheric error is $L_I = (\Delta\nabla I_1, \Delta\nabla I_2, ..., \Delta\nabla I_m)^T$, the observation value of the tropospheric error is $L_T = (\Delta\nabla T_1, \Delta\nabla T_2, ..., \Delta\nabla T_m)^T$, and m is a number of the baselines for establishing the atmospheric error model. A is a coefficient matrix related to the coordinate position of the baseline, and X is the model parameter to be calculated.

After determining the coefficient matrix A and the observation value L, the above modeling equation can be solved to determine the model parameter of the atmospheric error model. For example, a least square method can be used to solve the above-mentioned modeling equation to obtain the model parameter of the atmospheric error model as follows:

$$\hat{X} = \left(A^T PA\right)^{-1} A^T PL_;$$

In S530, the terminal can determine a plurality of grid point positions in an area of the base station network according to the area of the base station network, and determine differential correction data and a quality indicator corresponding to each grid point position according to the model parameter of the above-mentioned atmospheric error model and the position coordinates of each grid point. Herein, the differential correction data of the grid point position is the ionospheric error and the tropospheric error of the grid point position, and the quality indicator is an ionospheric modeling error quality indicator of each satellite and a tropospheric modeling error quality indicator of each satellite at the grid point position.

After obtaining the model parameter of the atmospheric error model according to the above-mentioned modeling equation, if it is desired to calculate the ionospheric error and tropospheric error at a certain particular position, the ionospheric error and tropospheric error can be obtained through the calculation equation of the differential correction data, and the calculation equation of the differential correction data is as follows:

$$L_{correction} = B_{correction}\hat{X}_;$$

where $B_{correction}$ is a coefficient matrix corresponding to the coordinates of the grid point position, $L_{correction}$ is an ionospheric error value or a tropospheric error value of the calculated grid point position.

It may be appreciated that in the area of the base station network, a plurality of grid point positions can be generated by an interpolation algorithm, and an ionospheric error value or a tropospheric error value corresponding to each grid point position is calculated by the above-mentioned calculation equation of the differential correction data, that is, differential correction data corresponding to each grid point position is calculated. The interpolation algorithm may be an inverse distance weighting method, a linear interpolation method, a least squares collocation method, etc. After calculating the differential correction data of each grid point position, if the server receives the approximate position sent by the terminal, the grid point position closest to the approximate position can be determined, and the differential correction data and the quality indicator of the closest grid point position can be broadcast to the terminal.

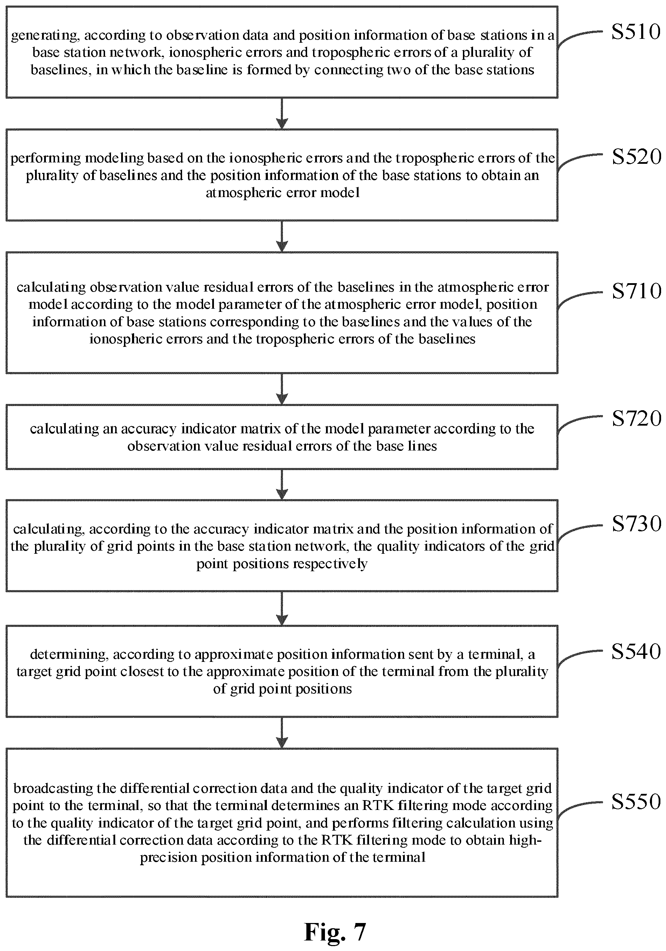

As an optional embodiment, referring to Fig. 7, in order to generate the quality indicator of the grid point position, the above-described S530 may include:

> S710: calculating observation value residual errors of the baselines in the atmospheric error model according to the model parameter of the atmospheric error model, position information of base stations corresponding to the baselines and the values of the ionospheric errors and the tropospheric errors of the baselines;
> S720: calculating an accuracy indicator matrix of the model parameter according to the observation value residual errors of the base lines; and
> S730: calculating, according to the accuracy indicator matrix and the position information of the plurality of grid points in the base station network, the quality indicators of the grid point positions respectively.

In this embodiment, after determining the positions of various grid points in the area of the base station network, and calculating the ionospheric error and the tropospheric error respectively corresponding to each grid point position, i.e., the differential correction data corresponding to each grid point position, the ionospheric modeling error quality indicator of various satellites and the tropospheric modeling error quality indicator of various satellites at each grid point position can also be calculated.

In S710, after calculating the model parameter of the atmospheric error model, the server may also put the coordinate positions of the baselines into the model parameter to obtain ionospheric error values and tropospheric error values corresponding to the baseline positions under the atmospheric error model. According to the ionospheric error values and the tropospheric error values of the baselines under the atmospheric error model and the above-mentioned ionospheric error values and tropospheric error values obtained by back-calculating according to the double difference ambiguities of the baselines, the server can determine the observation value residual errors between the actual error values and the error values calculated by the model under the atmospheric error model. The calculation equation for the observation value residual error is as follows:

$$V = A\hat{X} - L \,;$$

In the above equation, A is a coefficient matrix related to the coordinate position of the baseline, L is an ionospheric error value or a tropospheric error value of the baseline obtained by back-calculating according to double-difference ambiguity, and V is an observation value residual error of the atmospheric error model.

In S720, according to the observation value residual error of each baseline, a corresponding unit weight standard difference can be calculated, and the calculation equation for the unit weight standard difference is:

$$\sigma_0 = \sqrt{\frac{V^T P V}{n-k}};$$

where $\sigma_0$ is the unit weight standard difference, n is a number of the baselines, and k is a number of modeling parameters in the atmospheric error model.

After calculating the unit weight standard difference, an accuracy indicator matrix of the modeling parameter of the atmospheric error model can be calculated according to the unit weight standard difference. The calculation equation for the accuracy indicator matrix is as follows:

$$D = \sigma_0^2 \left( A^T P A \right)^{-1} \,;$$

In S730, after the accuracy indicator matrix is calculated, the server can calculate the quality indicator of the grid point position according to the position information of the grid point in the base station network. After calculating the position information of each grid point, the quality indicator of each grid point position can be obtained. The calculation equation is as follows:

$$\sigma_{correction} = \sqrt{B_{correction} D B^T_{correction}} \,;$$

where $B_{correction}$ is a coefficient matrix corresponding to the coordinates of the grid point position, and D is the above-mentioned accuracy indicator matrix.

It may be appreciated that the quality indicator of each grid point position may include an ionospheric modeling error quality indicator and a tropospheric modeling error quality indicator. When calculating the observation value residual error of the atmospheric error model, if the input observation value is the ionospheric error value of each baseline, the final calculated quality indicator is the ionospheric modeling error quality indicator of each satellite. Similarly, if the input observation value is the tropospheric error value of each baseline, the final calculated quality indicator is the tropospheric modeling error quality indicator of each satellite.

In S540, the server, after determining the differential correction data and the quality indicator of each grid point position in the base station network, may determine an approximate position corresponding to the terminal according to the approximate position information sent by the terminal, and determine a grid point closest to the approximate position of the terminal from the plurality of grid point positions as a target grid point.

In S550, the server, after determining the target grid point according to the approximate position of the terminal, may acquire and broadcast the differential correction data and the quality indicator of the target grid point to the terminal. The terminal, after receiving the differential correction data and the quality indicator of the target grid point, may determine the RTK filtering mode according to the quality indicator and perform filtering and calculation according to the determined RTK filtering mode using the differential correction data and the observation data of the terminal to obtain the high-precision position information of the terminal.

Based on the network RTK anti-ionospheric disturbance positioning method according to the above embodiments, accordingly, the present application also provides a specific implementation of the network RTK anti-ionospheric disturbance positioning apparatus. Reference may be made to the embodiments below.

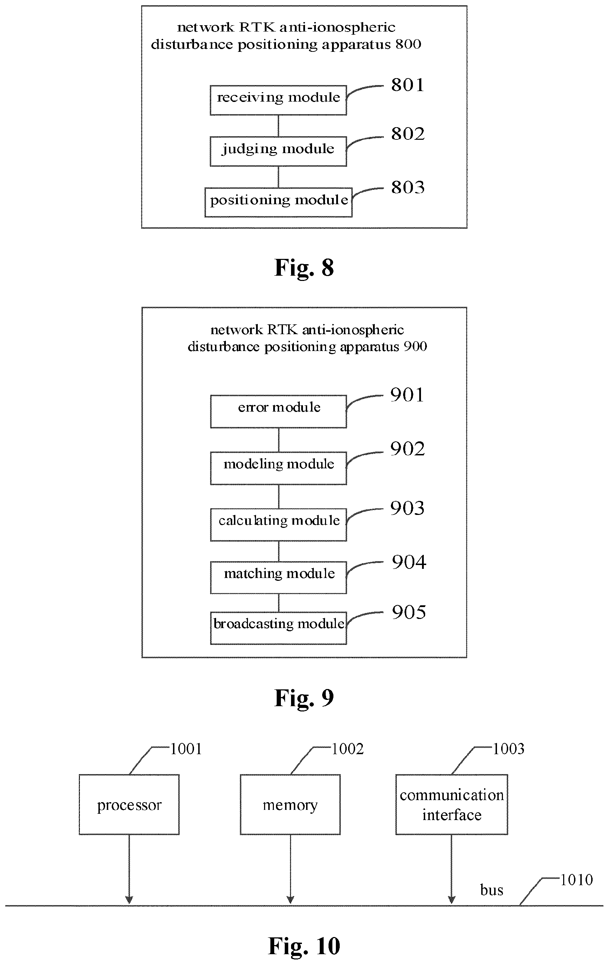

Referring to Fig. 8 firstly, a network RTK anti-ionospheric disturbance positioning apparatus 800 according to an embodiment of the present application includes the following modules:

a receiving module 801 configured to receive differential correction data and a quality indicator broadcast by a server, where the differential correction data and the quality indicator are generated by the server according to observation data and position information of base stations and approximate position information uploaded by the terminal, and the quality indicator is configured to characterize accuracy of an atmospheric error model used for generating the differential correction data;

a judging module 802 configured to determine, according to the received quality indicator, an RTK filtering mode, where the RTK filtering mode includes an ionosphere-free combined filtering mode or a non-combined filtering mode; and

a positioning module 803 configured to perform filtering and calculation, using the determined RTK filtering mode, on observation data of the terminal and the differential correction data received by the terminal to obtain high-precision position information of the terminal.

Alternatively, referring to Fig. 9, the apparatus includes:

an error module 901 configured to generate, according to observation data and position information of base stations in a base station network, ionospheric errors and tropospheric errors of a plurality of baselines, where the baseline is formed by connecting two of the base stations;

a modeling module 902 configured to perform modeling based on the ionospheric errors and the tropospheric errors of the plurality of baselines and the position information of the base stations to obtain an atmospheric error model;

a calculating module 903 configured to calculate differential correction data for a plurality of grid point positions in the base station network and quality indicators for the plurality of grid point positions according to a model parameter of the atmospheric error model;

a matching module 904 configured to determine, according to approximate position information sent by a terminal, a target grid point closest to the approximate position of the terminal from the plurality of grid point positions; and

a broadcasting module 905 configured to broadcast differential correction data and a quality indicator for the target grid point to the terminal, so that the terminal determines an RTK filtering mode according to the quality indicator for the target grid point, and performs filtering and calculation according to the RTK filtering mode and using the differential correction data to obtain high-precision position information of the terminal, where the RTK filtering mode includes an ionosphere-free combined filtering mode or a non-combined filtering mode.

In this embodiment, the base stations can send their observation data and position information to the server, and the terminal can send its approximate position information to the server. The server can generate, according to the observation data and the position information of the base stations and the approximate position information uploaded by the terminal, differential correction data and a quality indicator corresponding to the terminal. After receiving the differential correction data and the quality indicator, the terminal can select a corresponding RTK filtering mode according to the quality indicator, so as to select an RTK filtering mode that can effectively eliminate the ionospheric residual error when the ionosphere is active, and can also perform filtering and calculation under the determined filtering mode according to the differential correction data and its observation data to fix the integer ambiguity and obtain the high-precision position information of the terminal. The server broadcasts the quality indicator for characterizing the accuracy of the atmospheric error model, which enables the terminal to select the RTK filtering mode from the ionosphere-free combined filtering mode or the non-combined filtering mode according to the quality indicator, and when the ionosphere is the active period, select the ionosphere-free combined filtering mode for eliminating the ionospheric error to perform filtering and calculation, so as to eliminate the influence of the ionospheric error, and then realize high-precision positioning during the active period of the ionosphere.

As an implementation of the present application, in order to eliminate the influence of the ionospheric error when the ionosphere is active, the above-mentioned judging module 802 may further include:

> a judgment unit configured to judge, according to the received quality indicator, whether ionosphere at a current epoch is active;
> a first acquisition unit configured to acquire, under a condition that the ionosphere at the current epoch is active, a number of epochs at which ionosphere is active in a first time period; and
> a first determination unit configured to determine, when the number of epochs at which the ionosphere is active reaches a preset first epoch threshold, the ionosphere-free combined filtering mode as the RTK filtering mode.

As an implementation of the present application, in order to achieve the high-precision positioning when the ionosphere is inactive, the above-mentioned judging module 802 may further include:

> a second acquisition unit configured to acquire, under a condition that the ionosphere at the current epoch is inactive, a number of epochs at which the ionosphere is inactive in a second time period; and
> a second determination unit configured to switch, under a condition that the number of epochs at which the ionosphere is inactive reaches a preset second epoch threshold, the RTK filtering mode to the non-combined filtering mode.

As an implementation method of the present application, in order to judge whether an ionosphere is active according to a quality indicator, the quality indicator includes ionosphere quality indicators corresponding to a plurality of satellites and troposphere quality indicators corresponding to the plurality of satellites, and the above-mentioned judgment unit may further include:

a first sequencing subunit configured to sequence the received the ionospheric quality indicators of the plurality of satellites and the received tropospheric quality indicators of the plurality of satellites respectively from small to large;
a first comparing subunit configured to judge whether an ionospheric quality indicator at a first quantile is greater than a tropospheric quality indicator at a second quantile, and whether the ionospheric quality indicator at the first quantile is greater than a preset minimum activity threshold, where the first quantile is less than or equal to the second quantile.

The judging module 802 further includes:
a first activity subunit configured to determine, when the ionospheric quality indicator at the first quantile is greater than the tropospheric quality indicator at the second quantile, and the ionospheric quality indicator at the first quantile is greater than the preset minimum activity threshold, that the ionosphere at the current epoch is active.

Alternatively, the judgement unit may further include:

> a second sequencing subunit configured to sequence the received the ionospheric quality indicators of the plurality of satellites and the received tropospheric quality indicators of the plurality of satellites respectively from large to small;
> a second sequencing subunit configured to judge whether an ionospheric quality indicator at a third quantile is greater than a tropospheric quality indicator at a fourth quantile, and whether the ionospheric quality indicator at the third quantile is greater than a preset minimum activity threshold, where the third quantile is greater than or equal to the fourth quantile.

The judging module 802 further includes:
a second sequencing subunit configured to determine, when the ionospheric quality indicator at the third quantile is greater than the tropospheric quality indicator at the fourth quantile, and the ionospheric quality indicator at the third quantile is greater than the preset minimum activity threshold, that the ionosphere at the current epoch is active.

As an implementation of the present application, in order to generate the ionospheric error and the tropospheric error of the baseline, the above-mentioned error module 901 may further include:

> a fixing unit configured to calculate, according to the observation data and position information of the base stations in the base station network, double difference ambiguities of the plurality of baselines;
> an error unit configured to calculate, according to the double difference ambiguities of the plurality of baselines, values of the ionospheric errors and tropospheric errors of the plurality of baselines.

As an implementation of the present application, in order to generate the quality indicators of the grid point positions, the above-mentioned calculating module 903 may further include:

a residual error unit configured to calculate observation value residual errors of the baselines in the atmospheric error model according to the model parameter of the atmospheric error model, position information of base stations corresponding to the baselines and the values of the ionospheric errors and the tropospheric errors of the baselines;

an accuracy unit configured to calculate an accuracy indicator matrix of the model parameter according to the observation value residual errors of the baselines; and

a calculation unit configured to calculate, according to the accuracy indicator matrix and the position information of the plurality of grid points in the base station network, the quality indicators of the grid point positions respectively.

The network RTK anti-ionospheric disturbance positioning apparatus according to the embodiments of the present application can implement various processes in the method embodiments of Figs. 1 to 7, which is not repeated herein to avoid repetition.

An embodiment of the present application provides a network RTK anti-ionospheric disturbance positioning system, including a server and a terminal, and the system includes:

the server generates, according to observation data and position information of base stations in a base station network, ionospheric errors and tropospheric errors of a plurality of baselines, where the baseline is formed by connecting two of the base stations;

the server performs modeling based on the ionospheric errors and the tropospheric errors of the plurality of baselines and the position information of the base stations to obtain an atmospheric error model;

the server calculates differential correction data for a plurality of grid point positions in the base station network and quality indicators for the plurality of grid point positions according to a model parameter of the atmospheric error model;

the server determines, according to approximate position information sent by a terminal, a target grid point closest to the approximate position of the terminal from the plurality of grid point positions;

the server broadcasts differential correction data and a quality indicator for the target grid point to the terminal;

the terminal receives differential correction data and a quality indicator broadcast by a server, where the differential correction data and the quality indicator are generated by the server according to observation data and position information of base stations and approximate position information uploaded by the terminal, and the quality indicator is configured to characterize accuracy of an atmospheric error model used for generating the differential correction data;

the terminal determines, according to the received quality indicator, an RTK filtering mode, where the RTK filtering mode includes an ionosphere-free combined filtering mode or a non-combined filtering mode; and

the terminal performs filtering and calculation, using the determined RTK filtering mode, on observation data of the terminal and the differential correction data received by the terminal to obtain high-precision position information of the terminal.

The network RTK anti-ionospheric disturbance positioning system according to the embodiment of the present application can implement various processes in the method embodiments of Figs. 1 to 7, which is not repeated herein to avoid repetition.

Fig. 10 shows a schematic hardware structural diagram of a network RTK anti-ionospheric disturbance positioning device according to an embodiment of the present application.

The network RTK anti-ionospheric disturbance positioning device may include a processor 1001 and a memory 1002 storing computer program instructions.

In particular, the processor 1001 may include a central processing unit (CPU), or an application specific integrated circuit (ASIC), or may be configured to implement one or more integrated circuits in the embodiments of the present application.

The Memory 1002 may include a mass memory for data or instructions. By way of example, and not limitation, the memory 1002 may include a hard disk drive (HDD), a floppy disk drive, a flash memory, an optical disk, a magneto-optical disk, a magnetic tape, or a universal serial bus (USB) drive or a combination of two or more of them. Where appropriate, the memory 1002 may include a removable or non-removable (or fixed) medium. Where appropriate, the memory 1002 may be internal or external to the network RTK anti-ionospheric disturbance positioning device. In particular embodiments, the memory 1002 is a non-volatile solid state memory.

The memory may include a read only memory (ROM), a random access memory (RAM), a magnetic disk storage media device, an optical storage media device, a flash memory device, an electrical, optical or other physical/tangible memory storage device. Thus, the memory generally includes one or more tangible (non-transitory) readable storage media (for example, memory devices) encoded with software which includes computer-executable instructions, and the software, when executed (for example, by one or more processors), is operable to perform the operations described with reference to the methods according to an aspect of the present application.

The processor 1001 reads and executes the computer program instructions stored in the memory 1002 to implement any of the network RTK anti-ionospheric disturbance positioning methods in the above embodiments.

In one example, the network RTK anti-ionospheric disturbance positioning device may further include a communication interface 1003 and a bus 1010. Herein, as shown in Fig. 10, the processor 1001, the memory 1002, and the communication interface 1003 are connected through the bus 1010.

The communication interface 1003 is mainly configured to realize communication between various modules, apparatuses, units and/or devices in the embodiments of the present application.

The bus 1010 includes hardware, software, or both of them, and is configured to couple components of the network RTK anti-ionospheric disturbance positioning device to each other. By way of example and not limitation, the bus may include an Accelerated Graphics Port (AGP) or other graphics buses, an Enhanced Industry Standard Architecture (EISA) bus, a Front Side Bus (FSB), a Hyper Transport (HT) interconnect, an Industry Standard Architecture (ISA) bus, an infinite bandwidth interconnect, a Low Pin Count (LPC) bus, a memory bus, a Micro Channel Architecture (MCA) bus, a Peripheral Component Interconnect (PCI) bus, a PCI-Express (PCI-X) bus, a Serial Advanced Technology Attachment (SATA) bus, a Video Electronics Standards Association Local Bus (VLB) bus, or other suitable buses, or a combination thereof. Where appropriate, the bus 1010 may include one or more buses. Although the embodiments of the present application describe and illustrate a particular bus, any suitable bus or interconnect is considered in the present application.

The network RTK anti-ionospheric disturbance positioning device may realize the network RTK anti-ionospheric disturbance positioning method and apparatus described in connection with Figs. 1 to 9 based on the above embodiments.

In addition, in connection with the network RTK anti-ionospheric disturbance positioning method in the above embodiments, the embodiments of the present application can provide a computer storage medium for implementation. The computer storage medium stores computer program instructions that, when executed by a processor, implement any of the network RTK anti-ionospheric disturbance positioning methods in the above embodiments.

It should be noted that, the present application is not limited to the specific configuration and processing described above and shown in the drawings. For the sake of brevity, a detailed description of the known method is omitted here. In the embodiments, several specific steps are described and shown as examples. However, the method process of the present application is not limited to the specific steps described and shown, and those skilled in the art can make various changes, modifications and additions, or change the sequence of steps after comprehending the gist of the present application.

The functional blocks shown in the above structural block diagrams may be implemented as hardware, software, firmware, or a combination thereof. When embodied as hardware, the functional block may be, for example, an electronic circuit, an Application Specific Integrated Circuit (ASIC), an appropriate firmware, plug-in, function card, and the like. When implemented as software, elements of the present application are programs or code segments used to perform required tasks. The programs or code segments may be stored in a machine-readable medium, or transmitted on a transmission medium or a communication link through a data signal carried in a carrier wave. A "machine-readable medium" may include any medium that can store or transmit information. An example of the machine-readable media includes an electronic circuit, a semiconductor memory device, a ROM, a flash memory, an erasable ROM (EROM), a floppy disk, a CD-ROM, an optical disk, a hard disk, a fiber optic medium, a radio frequency (RF) link, and the like. The code segments may be downloaded via a computer network such as the Internet, intranet, and the like.

It should also be noted that, according to the exemplary embodiments described in the present application, some methods or systems are described based on a series of steps or apparatuses. However, the present application is not limited to the order of the steps, that is, the steps may be executed in the order described in the embodiments or in orders different from that in the embodiments, or several steps may be executed at the same time.

Aspects of the present application are described above with reference to flowcharts and/or block diagrams of methods, apparatuses and computer program products according to the embodiments of the present application. It should be understood that the each block of flowchart illustrations and/or the block diagrams, and a combination of various blocks of the flowchart illustrations and/or the block diagrams may be implemented by the computer program instructions. These computer program instructions may be provided to a processor of a general purpose computer, special purpose computer, or other programmable data processing apparatuses to produce a machine such that execution of the instructions via the processor of the computer or other programmable data processing apparatuses enables the implementation of the functions/actions specified in one or more blocks of the flowchart illustrations and/or block diagrams. Such processor may be but not limited to a general purpose processor, a special purpose processor, an application specific processor, or a field programmable logic circuit. It should also be understood that each block of the block diagrams and/or the flowchart illustrations, and the combination of blocks of the block diagrams and/or the flowchart illustrations may also be implemented by special purpose hardware that performs specified functions or actions, or by the combination of the special purpose hardware and computer instructions.

The above are only specific implementations of the present application, those skilled in the art can clearly understand that the specific working processes of the above-described systems, modules and units can be referred to the corresponding processes in the foregoing method embodiments for the convenience and brevity of the description, which is not repeated herein. It should be understood that the protection scope of the present application is not limited to this, and any person skilled in the art can easily think of various equivalent modifications or replacements within the technical scope disclosed in the present application, and these modifications or replacements should all be covered within the scope of protection of the present application.

## Claims

1. A network RTK anti-ionospheric disturbance positioning method applicable to a terminal, the method comprising:

   receiving differential correction data and a quality indicator broadcast by a server, wherein the differential correction data and the quality indicator are generated by the server according to observation data and position information of base stations and approximate position information uploaded by the terminal, and the quality indicator is configured to characterize accuracy of an atmospheric error model used for generating the differential correction data;
   determining, according to the received quality indicator, an RTK filtering mode, wherein the RTK filtering mode comprises an ionosphere-free combined filtering mode or a non-combined filtering mode; and
   performing filtering and calculation, using the determined RTK filtering mode, on observation data of the terminal and the differential correction data received by the terminal to obtain high-precision position information of the terminal.

2. The network RTK anti-ionospheric disturbance positioning method according to claim 1, wherein the determining, according to the received quality indicator, the RTK filtering mode comprises:

   judging, according to the received quality indicator, whether ionosphere at a current epoch is active;
   acquiring, when the ionosphere at the current epoch is active, a number of epochs at which the ionosphere is active in a first time period; and
   determining, when the number of epochs at which the ionosphere is active reaches a preset first epoch threshold, the ionosphere-free combined filtering mode as the RTK filtering mode.

3. The network RTK anti-ionospheric disturbance positioning method according to claim 2, wherein after the determining the ionosphere-free combined filtering mode as the RTK filtering mode, the method further comprises:

   acquiring, when the ionosphere at the current epoch is inactive, a number of epochs at which the ionosphere is inactive in a second time period; and
   switching, when the number of epochs at which the ionosphere is inactive reaches a preset second epoch threshold, the RTK filtering mode to the non-combined filtering mode.

4. The network RTK anti-ionospheric disturbance positioning method according to claim 2, wherein the quality indicator comprises ionospheric quality indicators corresponding to a plurality of satellites and tropospheric quality indicators corresponding to the plurality of satellites; and the judging, according to the received quality indicator, whether the ionosphere at the current epoch is active comprises:

   sequencing the received ionospheric quality indicators of the plurality of satellites and the received tropospheric quality indicators of the plurality of satellites respectively from small to large; and
   judging whether an ionospheric quality indicator at a first quantile is greater than a tropospheric quality indicator at a second quantile, and whether the ionospheric quality indicator at the first quantile is greater than a preset minimum activity threshold, wherein the first quantile is less than or equal to the second quantile;
   after the judging, according to the received quality indicator, whether the ionosphere at the current epoch is active, the method further comprises:

   determining, when the ionospheric quality indicator at the first quantile is greater than the tropospheric quality indicator at the second quantile, and the ionospheric quality indicator at the first quantile is greater than the preset minimum activity threshold, that the ionosphere at the current epoch is active; or
   sequencing the received ionospheric quality indicators of the plurality of satellites and the received tropospheric quality indicators of the plurality of satellites respectively from large to small; and
   judging whether an ionospheric quality indicator at a third quantile is greater than a tropospheric quality indicator at a fourth quantile, and whether the ionospheric quality indicator at the third quantile is greater than a preset minimum activity threshold, wherein the third quantile is greater than or equal to the fourth quantile;

after the judging, according to the received quality indicator, whether the ionosphere at the current epoch is active, the method further comprises:

determining, when the ionospheric quality indicator at the third quantile is greater than the tropospheric quality indicator at the fourth quantile, and the ionospheric quality indicator at the third quantile is greater than the preset minimum activity threshold, that the ionosphere at the current epoch is active.

5. A network RTK anti-ionospheric disturbance positioning method applicable to a server, the method comprising:

generating, according to observation data and position information of base stations in a base station network, ionospheric errors and tropospheric errors of a plurality of baselines, wherein the baseline is formed by connecting two of the base stations;

performing modeling based on the ionospheric errors and the tropospheric errors of the plurality of baselines and the position information of the base stations to obtain an atmospheric error model;

calculating differential correction data for a plurality of grid point positions in the base station network and quality indicators for the plurality of grid point positions according to a model parameter of the atmospheric error model;

determining, according to approximate position information sent by a terminal, a target grid point closest to an approximate position of the terminal from the plurality of grid point positions;

broadcasting differential correction data and a quality indicator for the target grid point to the terminal, so that the terminal determines an RTK filtering mode according to the quality indicator for the target grid point, and performs, using the differential correction data, filtering and calculation according to the RTK filtering mode to obtain high-precision position information of the terminal, wherein the RTK filtering mode comprises an ionosphere-free combined filtering mode or a non-combined filtering mode.

6. The network RTK anti-ionospheric disturbance positioning method according to claim 5, wherein the generating, according to the observation data and the position information of the base stations in the base station network, the ionospheric errors and the tropospheric errors of the plurality of baselines comprises:

calculating, according to the observation data and position information of the base stations in the base station network, double difference ambiguities of the plurality of baselines;

calculating, according to the double difference ambiguities of the plurality of base lines, values of the ionospheric errors and tropospheric errors of the plurality of baselines.

7. The network RTK anti-ionospheric disturbance positioning method according to claim 5, wherein the calculating the differential correction data for the plurality of grid point positions in the base station network and the quality indicators for the plurality of grid point positions according to the model parameter of the atmospheric error model comprises:

calculating observation value residual errors of the baselines in the atmospheric error model according to the model parameter of the atmospheric error model, position information of base stations corresponding to the baselines and the values of the ionospheric errors and the tropospheric errors of the baselines;

calculating an accuracy indicator matrix of the model parameter according to the observation value residual errors of the base lines; and

calculating, according to the accuracy indicator matrix and position information of the plurality of grid point positions in the base station network, the quality indicators of the grid point positions respectively.

8. A network RTK anti-ionospheric disturbance positioning apparatus, comprising:

a receiving module configured to receive differential correction data and a quality indicator broadcast by a server, wherein the differential correction data and the quality indicator are generated by the server according to observation data and position information of base stations and approximate position information uploaded by the terminal, and the quality indicator is configured to characterize accuracy of an atmospheric error model used for generating the differential correction data;

a judging module configured to determine, according to the received quality indicator, an RTK filtering mode, wherein the RTK filtering mode comprises an ionosphere-free combined filtering mode or a non-combined filtering mode;

a positioning module configured to perform filtering and calculation, using the determined RTK filtering mode, on observation data of the terminal and the differential correction data received by the terminal to obtain high-precision position information of the terminal; or comprising:

an error module configured to generate, according to observation data and position information of base stations in a base station network, ionospheric errors and tropospheric errors of a plurality of baselines, wherein the baseline is formed by connecting two of the base stations;

a modeling module configured to perform modeling based on the ionospheric errors and the tropospheric errors of the plurality of baselines and the position information of the base stations to obtain an atmospheric error model;

a calculating module configured to calculate differential correction data for a plurality of grid point positions in the base station network and quality indicators for the plurality of grid point positions according to a model parameter of the atmospheric error model;

a matching module configured to determine, according to approximate position information sent by a terminal, a target grid point closest to an approximate position of the terminal from the plurality of grid point positions; and

a broadcasting module configured to broadcast differential correction data and a quality indicator for the target grid point to the terminal, so that the terminal determines an RTK filtering mode according to the quality indicator for the target grid point, and performs, using the differential correction data, filtering and calculation according to the RTK filtering mode to obtain high-precision position information of the terminal, wherein the RTK filtering mode comprises an ionosphere-free combined filtering mode or a non-combined filtering mode.

9. A network RTK anti-ionospheric disturbance positioning system, comprising a server and a terminal, wherein:

the server generates, according to observation data and position information of base stations in a base station network, ionospheric errors and tropospheric errors of a plurality of baselines, wherein the baseline is formed by connecting two of the base stations;

the server performs modeling based on the ionospheric errors and the tropospheric errors of the plurality of baselines and the position information of the base stations to obtain an atmospheric error model;

the server calculates differential correction data for a plurality of grid point positions in the base station network and quality indicators for the plurality of grid point positions according to a model parameter of the atmospheric error model;

the server determines, according to approximate position information sent by a terminal, a target grid point closest to the approximate position of the terminal from the plurality of grid point positions;

the server broadcasts differential correction data and a quality indicator for the target grid point to the terminal;

the terminal receives differential correction data and a quality indicator broadcast by a server, wherein the differential correction data and the quality indicator are generated by the server according to observation data and position information of base stations and approximate position information uploaded by the terminal, and the quality indicator is configured to characterize accuracy of an atmospheric error model used for generating the differential correction data;

the terminal determines an RTK filtering mode according to the received quality indicator, wherein the RTK filtering mode comprises an ionosphere-free combined filtering mode or a non-combined filtering mode; and

the terminal performs filtering and calculation, using the determined RTK filtering mode, on observation data of the terminal and the differential correction data received by the terminal to obtain high-precision position information of the terminal.

10. A network RTK anti-ionospheric disturbance positioning device comprising: a processor and a memory storing computer program instructions;

wherein the processor, when executing the computer program instructions, implements the network RTK anti-ionospheric disturbance positioning method according to any of claims 1-7.

11. A computer storage medium having computer program instructions stored thereon, wherein the computer program instructions, when executed by a processor, implement the network RTK anti-ionospheric disturbance positioning method according to any of claims 1 to 7.

receiving differential correction data and a quality indicator broadcast by a server — S110

determining, according to the received quality indicator, an RTK filtering mode, in which the RTK filtering mode includes an ionosphere-free combined filtering mode or a non-combined filtering mode — S120

performing filtering and calculation, using the determined RTK filtering mode, on observation data of the terminal and the difference correction data received by the terminal to obtain high-precision position information of the terminal — S130

**Fig. 1**

receiving differential correction data and a quality indicator broadcast by a server — S110

judging, according to the received quality indicator, whether ionosphere at a current epoch is active — S210

yes

acquiring a number of epochs at which ionosphere is active in a first time period — S220

determining, when the number of epochs at which the ionosphere is active reaches a preset first epoch threshold, the ionosphere-free combined filtering mode as the RTK filtering mode — S230

performing filtering and calculation, using the determined RTK filtering mode, on observation data of the terminal and the differential correction data received by the terminal to obtain high-precision position information of the terminal. — S130

**Fig. 2**

receiving differential correction data and a quality indicator broadcast by a server — S110

judging, according to the received quality indicator, whether ionosphere at a current epoch is active — S210

yes

acquiring a number of epochs at which ionosphere is active in a first time period — S220

determining, when the number of epochs at which the ionosphere is active reaches a preset first epoch threshold, the ionosphere-free combined filtering mode as the RTK filtering mode — S230

no

acquiring a number of epochs at which ionosphere is inactive in a second time period — S310

switching, when the number of epochs at which the ionosphere is inactive reaches a preset second epoch threshold, the RTK filtering mode to the non-combined filtering mode — S320

performing filtering and calculation, using the determined RTK filtering mode, on observation data of the terminal and the differential correction data received by the terminal to obtain high-precision position information of the terminal — S130

**Fig. 3**

sequencing the received ionospheric quality indicators of the plurality of satellites and the received tropospheric quality indicators of the plurality of satellites respectively from small to large — S410

judging whether an ionospheric quality indicator at a first quantile is greater than a tropospheric quality indicator at a second quantile, and whether the ionospheric quality indicator at the first quantile is greater than a preset minimum activity threshold, in which the first quantile is less than or equal to the second quantile — S420

yes

determining that the ionosphere at the current epoch is active — S430

**Fig. 4**

generating, according to observation data and position information of base stations in a base station network, ionospheric errors and tropospheric errors of a plurality of baselines, in which the baseline is formed by connecting two of the base stations — S510

performing modeling based on the ionospheric errors and the tropospheric errors of the plurality of baselines and the position information of the base stations to obtain an atmospheric error model — S520

calculating differential correction data for a plurality of grid point positions in the base station network and quality indicators for the plurality of grid point positions according to a model parameter of the atmospheric error model — S530

determining, according to approximate position information sent by a terminal, a target grid point closest to the approximate position of the terminal from the plurality of grid point positions — S540

broadcasting the differential correction data and the quality indicator of the target grid point to the terminal, so that the terminal determines an RTK filtering mode according to the quality indicator of the target grid point, and performs filtering calculation using the differential correction data according to the RTK filtering mode to obtain high-precision position information of the terminal — S550

**Fig. 5**

| | |
|---|---|
| calculating, according to the observation data and position information of the base stations in the base station network, double difference ambiguities of the plurality of baselines | S610 |

↓

| | |
|---|---|
| calculating, according to the double difference ambiguities of the plurality of base lines, values of the ionospheric errors and tropospheric errors of the plurality of baselines | S620 |

↓

| | |
|---|---|
| performing modeling based on the ionospheric errors and the tropospheric errors of the plurality of baselines and the position information of the base stations to obtain an atmospheric error model | S520 |

↓

| | |
|---|---|
| calculating differential correction data for a plurality of grid point positions in the base station network and quality indicators for the plurality of grid point positions according to a model parameter of the atmospheric error model | S530 |

↓

| | |
|---|---|
| determining, according to approximate position information sent by a terminal, a target grid point closest to the approximate position of the terminal from the plurality of grid point positions | S540 |

↓

| | |
|---|---|
| broadcasting the differential correction data and the quality indicator of the target grid point to the terminal, so that the terminal determines an RTK filtering mode according to the quality indicator of the target grid point, and performs filtering calculation using the differential correction data according to the RTK filtering mode to obtain high-precision position information of the terminal | S550 |

# Fig. 6

generating, according to observation data and position information of base stations in a base station network, ionospheric errors and tropospheric errors of a plurality of baselines, in which the baseline is formed by connecting two of the base stations

S510

performing modeling based on the ionospheric errors and the tropospheric errors of the plurality of baselines and the position information of the base stations to obtain an atmospheric error model

S520

calculating observation value residual errors of the baselines in the atmospheric error model according to the model parameter of the atmospheric error model, position information of base stations corresponding to the baselines and the values of the ionospheric errors and the tropospheric errors of the baselines

S710

calculating an accuracy indicator matrix of the model parameter according to the observation value residual errors of the base lines

S720

calculating, according to the accuracy indicator matrix and the position information of the plurality of grid points in the base station network, the quality indicators of the grid point positions respectively

S730

determining, according to approximate position information sent by a terminal, a target grid point closest to the approximate position of the terminal from the plurality of grid point positions

S540

broadcasting the differential correction data and the quality indicator of the target grid point to the terminal, so that the terminal determines an RTK filtering mode according to the quality indicator of the target grid point, and performs filtering calculation using the differential correction data according to the RTK filtering mode to obtain high-precision position information of the terminal

S550

Fig. 7

network RTK anti-ionospheric
disturbance positioning apparatus 800

receiving module — 801

judging module — 802

positioning module — 803

**Fig. 8**

network RTK anti-ionospheric
disturbance positioning apparatus 900

error module — 901

modeling module — 902

calculating module — 903

matching module — 904

broadcasting module — 905

**Fig. 9**

processor — 1001

memory — 1002

communication interface — 1003

bus — 1010

**Fig. 10**

## INTERNATIONAL SEARCH REPORT

| | International application No. |
|---|---|
| | **PCT/CN2022/116380** |

**A. CLASSIFICATION OF SUBJECT MATTER**

G01S 19/41(2010.01)i;　G01S 19/07(2010.01)i

According to International Patent Classification (IPC) or to both national classification and IPC

**B. FIELDS SEARCHED**

Minimum documentation searched (classification system followed by classification symbols)

G01S19/-;　G01S5/-;

Documentation searched other than minimum documentation to the extent that such documents are included in the fields searched

Electronic data base consulted during the international search (name of data base and, where practicable, search terms used)

CNABS, VEN, DWPI, CNTXT, OETXT, USTXT, WOTXT, ENTXT, JPTXT, CNKI, IEEE, 读秀, DUXIU, 百度, BAIDU, 百度学术, BAIDU SCHOLAR, Web of Science: 千寻, 陈华炎, 电离层, 无电离层组合, 质量, 指标, 因子, 系数, 因数, 精度, 活跃, 大气, 滤波, 误差, 精度, 准确, 精确, (差分 2d 改正), 差分改正, 滤波, 位置, 定位, 消电离层, (大气 2w 模型); (Ionospheric? 1d Free), filter?, posit+, locat+, Ionospheric?, quality?, factor?, atmospheric?, error?, model?, RTK, correct+.

**C. DOCUMENTS CONSIDERED TO BE RELEVANT**

| Category* | Citation of document, with indication, where appropriate, of the relevant passages | Relevant to claim No. |
|---|---|---|
| Y | CN 112748455 A (QIANXUN SPATIAL INTELLIGENCE INC.) 04 May 2021 (2021-05-04) description, paragraphs 2-165 | 1-11 |
| Y | 黄丁发, 等 (HUANG, Dingfa, et al.). "卫星导航定位原理 (Non-official translation: Principles of Satellite Navigation and Positioning)" 卫星导航定位原理 *(Non-official translation: Principles of Satellite Navigation and Positioning)*, 31 January 2015 (2015-01-31), pages 155-158 | 1-11 |
| A | CN 111142133 A (QIANXUN SPATIAL INTELLIGENCE INC.) 12 May 2020 (2020-05-12) entire document | 1-11 |
| A | CN 106093992 A (NANJING LES INFORMATION TECHNOLOGY CO., LTD.) 09 November 2016 (2016-11-09) entire document | 1-11 |
| A | CN 103605145 A (SHANGHAI HUACE NAVIGATION TECHNOLOGY LTD.) 26 February 2014 (2014-02-26) entire document | 1-11 |

☑ Further documents are listed in the continuation of Box C. ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **04 November 2022** | **02 December 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2022/116380** |

### C. DOCUMENTS CONSIDERED TO BE RELEVANT

| Category* | Citation of document, with indication, where appropriate, of the relevant passages | Relevant to claim No. |
|---|---|---|
| A | CN 112835082 A (GUANGZHOU XINGJI INTERCONNECTION TECHNOLOGY CO., LTD.) 25 May 2021 (2021-05-25)<br>entire document | 1-11 |
| A | US 2018136339 A1 (PAEK, E. G.) 17 May 2018 (2018-05-17)<br>entire document | 1-11 |
| A | CN 102323572 A (BEIHANG UNIVERSITY) 18 January 2012 (2012-01-18)<br>entire document | 1-11 |
| A | CN 108169776 A (ACADEMY OF OPTO-ELECTRONICS, CHINESE ACADEMY OF SCIENCES) 15 June 2018 (2018-06-15)<br>entire document | 1-11 |
| A | EP 2746811 A2 (TRIMBLE NAVIGATION LTD.) 25 June 2014 (2014-06-25)<br>entire document | 1-11 |
| A | US 2009224969 A1 (KOLB, P. F.) 10 September 2009 (2009-09-10)<br>entire document | 1-11 |
| A | RU 2237257 C2 (NAVIGATIONAL SYSTEMS CONS BUR STOCK CO., LTD. et al.) 27 September 2004 (2004-09-27)<br>entire document | 1-11 |
| A | CN 111983654 A (CHINA UNIVERSITY OF MINING AND TECHNOLOGY) 24 November 2020 (2020-11-24)<br>entire document | 1-11 |
| A | CN 110531392 A (NANJING UNIVERSITY OF AERONAUTICS AND ASTRONAUTICS) 03 December 2019 (2019-12-03)<br>entire document | 1-11 |
| A | CN 101509970 A (SOUTHEAST UNIVERSITY) 19 August 2009 (2009-08-19)<br>entire document | 1-11 |
| A | CN 111929705 A (NAVAL UNIVERSITY OF ENGINEERING OF PLA) 13 November 2020 (2020-11-13)<br>entire document | 1-11 |
| A | CN 107229061 A (WUHAN UNIVERSITY) 03 October 2017 (2017-10-03)<br>entire document | 1-11 |
| A | CN 103760572 A (SOUTHEAST UNIVERSITY) 30 April 2014 (2014-04-30)<br>entire document | 1-11 |

Form PCT/ISA/210 (second sheet) (January 2015)

## INTERNATIONAL SEARCH REPORT
### Information on patent family members

International application No.

**PCT/CN2022/116380**

| Patent document cited in search report | | | Publication date (day/month/year) | Patent family member(s) | | | Publication date (day/month/year) |
|---|---|---|---|---|---|---|---|
| CN | 112748455 | A | 04 May 2021 | CN | 112748455 | B | 28 June 2022 |
| CN | 111142133 | A | 12 May 2020 | CN | 111142133 | B | 24 June 2022 |
| CN | 106093992 | A | 09 November 2016 | None | | | |
| CN | 103605145 | A | 26 February 2014 | CN | 103605145 | B | 08 February 2017 |
| CN | 112835082 | A | 25 May 2021 | None | | | |
| US | 2018136339 | A1 | 17 May 2018 | US | 10578748 | B2 | 03 March 2020 |
| CN | 102323572 | A | 18 January 2012 | CN | 103760572 | B | 07 September 2016 |
| CN | 108169776 | A | 15 June 2018 | CN | 108169776 | B | 21 January 2022 |
| EP | 2746811 | A2 | 25 June 2014 | US | 2014292573 | A1 | 02 October 2014 |
| | | | | US | 9557419 | B2 | 31 January 2017 |
| | | | | EP | 2746811 | A3 | 25 March 2015 |
| | | | | EP | 2746811 | B1 | 28 October 2020 |
| US | 2009224969 | A1 | 10 September 2009 | CN | 101258418 | A | 03 September 2008 |
| | | | | WO | 2007032947 | A1 | 22 March 2007 |
| | | | | DE | 112006002381 | T5 | 10 July 2008 |
| | | | | WO | 2007032947 | A9 | 21 February 2008 |
| | | | | WO | 2007032947 | A8 | 26 June 2008 |
| | | | | US | 7868820 | B2 | 11 January 2011 |
| | | | | CN | 101258418 | B | 21 September 2011 |
| RU | 2237257 | C2 | 27 September 2004 | None | | | |
| CN | 111983654 | A | 24 November 2020 | CN | 111983654 | B | 19 March 2021 |
| CN | 110531392 | A | 03 December 2019 | None | | | |
| CN | 101509970 | A | 19 August 2009 | None | | | |
| CN | 111929705 | A | 13 November 2020 | None | | | |
| CN | 107229061 | A | 03 October 2017 | CN | 107229061 | B | 03 September 2019 |
| CN | 103760572 | A | 30 April 2014 | CN | 103760572 | B | 06 September 2016 |

Form PCT/ISA/210 (patent family annex) (January 2015)

**EP 4 398 000 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111322856